# DEMANDE DE BREVET EUROPEEN

(11) **EP 1 981 244 A1**
(43) Date de publication de la demande: **15.10.2008**
(21) Numéro de dépôt: 07300950.8
(22) Date de dépôt: 13.04.2007
(51) Int. Cl.: H04L 29/08

(54) **Procédé pour établir une session depuis un dispositif sur un premier réseau via un deuxième dispositif et système électroniques correspondants**

(71) Demandeur: GEMPLUS, 13420 Gémenos (FR)
(72) Inventeur: Fine, Jean-Yves, 13006, Marseille (FR)

(57) **Abrégé**

L'invention concerne un procédé pour établir une session automatique à partir d'un dispositif électronique portable 10 sur un premier réseau 19 à partir d'un deuxième réseau 15. Le procédé comporte une étape de détermination 34 d'au moins un paramètre représentatif d'une qualité de transmission du deuxième réseau 15, une étape de comparaison 36 dudit paramètre à un premier seuil, une étape d'abandon 37 ou de tentative 38 d'ouverture de session, en fonction du résultat de la comparaison. De cette manière, les données ne sont transmises, depuis le dispositif électronique portable, que lorsque de bonnes conditions de transmission sont réunies. L'invention concerne également le dispositif électronique portable 10 et le système comprenant un dispositif hôte coopérant avec ledit dispositif électronique portable.

## Description

### Domaine technique de l'invention :

L'invention concerne, d'une façon générale, un procédé pour établir une session automatique à partir d'un dispositif électronique portable sur un premier réseau de communication au travers d'un deuxième réseau de communication.

L'invention porte également sur un dispositif électronique portable et un système électronique comportant un dispositif hôte coopérant avec un tel dispositif électronique portable.

### Etat de la technique :

Par dispositif électronique portable, il faut comprendre tout dispositif comportant des moyens de traitement d'informations et destiné à échanger des données. Typiquement, un dispositif électronique portable peut se présenter sous la forme d'une carte à puce comprenant au moins un microprocesseur et au moins une mémoire, telle que par exemple une carte SIM (acronyme pour « Subscriber Identity Module » en langue anglaise). Le dispositif électronique portable est destiné à coopérer avec un dispositif hôte, afin de pouvoir exploiter, au moins en partie, un ou plusieurs services accessibles depuis le dispositif électronique portable au travers du dispositif hôte.

Le dispositif hôte peut être notamment un téléphone mobile ou un assistant personnel numérique (ou PDA pour « Personal Digital Assistant » en langue anglaise). Le dispositif hôte peut être relié à un réseau de communication sans fil lui-même relié à un réseau filaire. A titre d'exemple, il peut s'agir du réseau Internet, en tant que réseau filaire.

Il est connu de faire communiquer une carte à puce avec le réseau Internet. La carte à puce doit transmettre des données en utilisant un protocole de communication propre au réseau Internet, tel que TCP/IP (acronyme pour « Transmission Control Protocol/Internet Protocol » en langue anglaise), afin de pouvoir transférer des données depuis la carte à puce vers un serveur distant et/ou télécharger des données depuis un serveur distant au sein de la carte à puce. Ces échanges de données via Internet permettent de mettre à jour des données propres à un ou des programmes et/ou une ou des applications supportées ou à supporter par la carte à puce et/ou modifier des paramètres de configuration de la carte à puce et/ou des données de contenu à sauvegarder au sein de la carte à puce propres à l'utilisation d'un porteur de la carte à puce.

Cependant, les cartes à puce sont dotées d'interfaces de communication de type ISO 7816 (pour « International Standard Organization » en langue anglaise), USB (pour « Universal Serial Bus » en langue anglaise), MMC (pour « Multimedia Memory Card » en langue anglaise) ou ISO 14443, qui ne permettent pas une communication directe avec Internet. Généralement, les cartes à puce communiquent par l'intermédiaire du dispositif hôte qui les hébergent ou d'un lecteur relié au réseau Internet. Lorsque la connexion au réseau Internet transite par un réseau sans fil, il s'avère qu'un protocole de communication comme TCP/IP n'est pas adapté.

En effet, TCP/IP est un protocole de communication adapté au réseau filaire qui supporte Internet. En cas de perte de paquets de données sur Internet, la cause vient généralement d'un engorgement d'un noeud du réseau. Le remède consiste à temporiser l'envoi des paquets de données. L'augmentation des durées entre les envois ou renvois de paquets permet aux paquets ralentis de ne pas être considérés comme étant perdus et évite de sursaturer le réseau Internet.

Dans le cas d'une communication sans fil ou communication radio, la transmission dépend des conditions de transmission. Les conditions de transmission dépendent de différents phénomènes physiques, tels que la distance séparant un émetteur de son récepteur, des phénomènes d'échos, de trajets multiples, ou d'interférences liées à une source de bruit électromagnétique, ou encore à une collision de messages. De mauvaises conditions de transmission entraînent une perte de paquets de données. Certains protocoles de transmission prévoient une auto-adaptation en jouant sur certains paramètres de transmission, tels que par exemple la puissance d'émission, c'est notamment le cas pour les téléphones mobiles.

La combinaison d'une transmission utilisant le protocole TCP/IP à travers un réseau sans fil présente une certaine incompatibilité. Lorsqu'un paquet est perdu à cause de mauvaises conditions de transmission, la réaction du protocole TCP/IP est de ralentir l'envoi de paquets de données pour leur laisser plus de temps pour être acheminés, au lieu de les renvoyer systématiquement pour augmenter la probabilité de bonne réception.

Dans le cas d'une carte à puce communicant avec le réseau Internet via un téléphone mobile, un inconvénient majeur est une double augmentation de la durée nécessaire à une session d'échange de données. La perte de paquets liée à de mauvaises conditions de transmission radio augmente le nombre de paquets à transmettre et cette même perte de paquets a pour effet d'augmenter la durée entre deux envois de paquets. La durée totale d'une session se trouve alors considérablement augmentée. Un effet de cette augmentation de durée touche directement à la consommation d'énergie du téléphone et de la carte avec laquelle ce dernier coopère, diminuant ainsi l'autonomie de la batterie. Un autre effet est l'ouverture d'une ou plusieurs sessions côté serveur sans obtenir de manière certaine une poursuite fructueuse d'échange de données. Encore un autre effet lié directement aux mauvaises conditions de transmission radio est une consommation de bande passante inutile.

### Exposé de l'invention :

L'invention s'affranchit des inconvénients précédemment énoncés en fournissant un procédé de gestion d'une session de communication depuis un dispositif électronique portable et un dispositif électronique portable mettant en oeuvre un tel procédé. Selon l'invention, l'établissement d'une session sur requête du dispositif électronique portable est conditionné par la qualité de transmission.

Plus particulièrement, l'invention est un procédé pour établir une session automatique à partir d'un dispositif électronique portable sur un premier réseau à partir d'un deuxième réseau. Le procédé comprend une étape de détermination d'au moins un premier paramètre représentatif d'une qualité de transmission du deuxième réseau, une étape de comparaison de la valeur dudit premier paramètre à un premier seuil, et une étape d'abandon ou tentative d'ouverture de session sur le premier réseau par le dispositif électronique portable à partir du deuxième réseau, en fonction du résultat de la comparaison.

Le principe général de l'invention repose donc sur une tentative d'ouverture de session conditionnée par la qualité de transmission propre au réseau de communication séparant le dispositif électronique portable du réseau de communication auquel le dispositif électronique portable cherche à accéder.

Il convient de noter que les conditions de transmission à travers le réseau intercalé entre le dispositif électronique portable et le réseau visé sont estimées à l'aide d'un ou plusieurs paramètres déterminés avant toute tentative d'ouverture de session sur le réseau visé.

Une session est réalisée uniquement si la valeur du paramètre ou les valeurs de paramètres correspondent à de bonnes conditions de transmission de données.

De cette manière, les données ne sont transmises, depuis le dispositif électronique portable, que lorsque de bonnes conditions de transmission sont réunies, et arrivent ainsi à destination du réseau visé sans perte. Le réseau intercalaire n'est donc pas inutilement surchargé en données. En outre, l'énergie consommée pour la transmission de données ainsi nécessaire est utilisée de manière efficace, c'est-à-dire sans perte de données au sein du réseau intercalaire.

Préférentiellement, on peut vérifier un autre ou d'autres paramètre(s) ou revérifier un ou des paramètres déjà utilisés lors de l'ouverture d'une session, afin de décider de poursuivre ou non la session. En particulier, le procédé comprend, en outre, une étape de détermination d'au moins un deuxième paramètre représentatif d'une qualité de transmission du deuxième réseau, une étape de comparaison de la valeur dudit deuxième paramètre à un deuxième seuil, une étape d'abandon ou de poursuite de session sur le premier réseau par le dispositif électronique portable à partir du deuxième réseau, en fonction du résultat de la comparaison.

Selon un autre aspect, l'invention est un dispositif électronique portable apte à établir une session automatique sur un premier réseau à partir d'un deuxième réseau. Le dispositif électronique portable comprend des moyens de communication et de traitement d'information. Les moyens de traitement et de communication sont configurés pour réaliser un moyen de détermination d'au moins un premier paramètre représentatif d'une qualité de transmission du deuxième réseau, un moyen de comparaison de la valeur dudit premier paramètre à un premier seuil, et un moyen de décision pour abandonner ou faire une tentative d'ouverture de session sur le premier réseau à partir du deuxième réseau, en fonction du résultat de la comparaison.

En tant que dispositif électronique portable, il peut, par exemple, s'agir d'une carte à puce communiquant avec l'extérieur par l'intermédiaire soit d'un lien radiofréquence soit d'un couplage capacitif au travers du corps d'un individu porteur du dispositif électronique portable.

Selon un autre aspect, l'invention est un système électronique comprenant un dispositif hôte, et un dispositif électronique portable tel que précité et coopérant avec le dispositif hôte.

En tant que dispositif hôte, il peut, par exemple, s'agir d'un terminal lecteur communiquant avec le dispositif électronique portable par l'intermédiaire soit d'un lien radiofréquence soit d'un couplage capacitif au travers du corps d'un individu porteur du dispositif électronique portable.

### Description des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 illustre un système de réseaux mettant en oeuvre l'invention ;
- la figure 2 illustre un schéma plus détaillé d'un dispositif électronique portable coopérant avec un dispositif hôte du système représenté sur la figure 1 ; et
- la figure 3 présente un organigramme d'un exemple d'un procédé selon l'invention.

### Description d'un mode de réalisation :

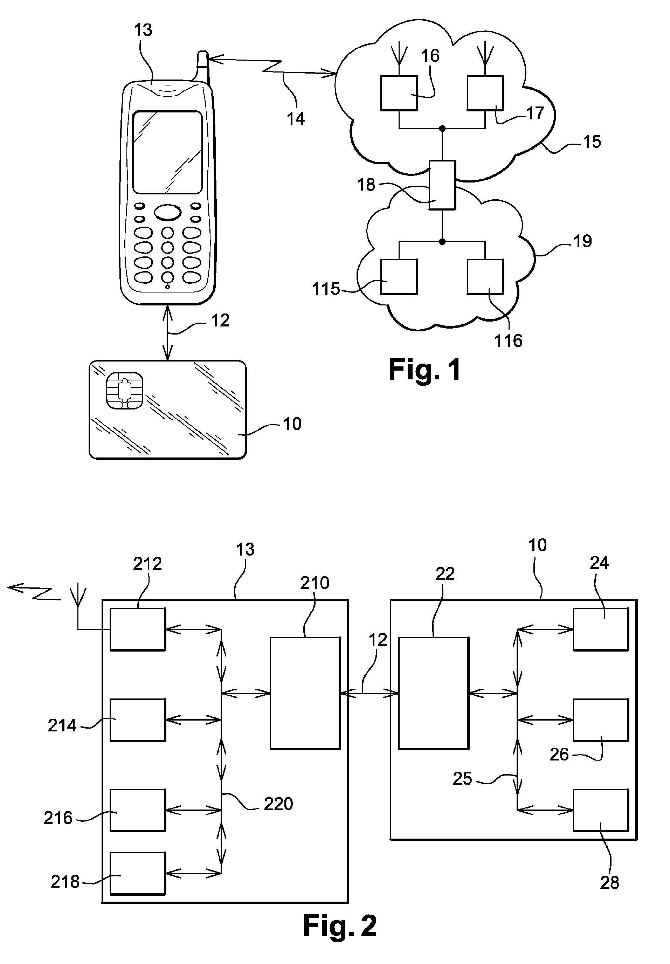

La figure 1 représente un système de réseaux qui permet d'avoir accès au réseau Internet 19 au travers d'un réseau radiocommunication 15 de type GSM (pour « Global System for Mobile Communication » en langue anglaise) supportant un échange de données de type GPRS (pour « General Packet Radio Service » en langue anglaise).

Il est clair, cependant, que l'invention s'applique à tout type de réseau filaire, autre qu'Internet, qui utilise un protocole de communication ayant les mêmes inconvénients que TCP/IP et dont l'accès se fait au travers d'un réseau sans fil. A titre d'alternative, le réseau de radiocommunication peut être de type EDGE (pour « Enhanced Data rate for GSM Evolution » en langue anglaise) ou de type UMTS (pour « Universal Mobile Telecommunications System » en langue anglaise).

Le réseau de radiocommunication 15 comporte une pluralité de stations de base 16 et 17 reliées entre elles, pour former un réseau de couverture radio pour téléphones portables. Internet 19 comporte une pluralité de serveurs 115 et 116 reliés entre eux par des noeuds de réseaux et des liaisons filaires. Le réseau de communication 15 et Internet 19 sont reliés entre eux par l'intermédiaire d'une passerelle 18, communément appelée « Gateway ».

Un téléphone portable 13 est relié, par un lien radiofréquence bidirectionnel 14, à une station de base 16 comprise au sein du réseau 15. Le téléphone portable 13 est muni d'une carte à puce 10, par exemple, de type SIM (pour « Subscriber Identity Module ») ou de type USIM (pour « Universal Subscriber Identity Module »). Un utilisateur du téléphone portable 13 étant amené à se déplacer, il est prévu de pouvoir choisir la station de base 16 ou 17 la plus appropriée pour communiquer et éventuellement transférer une communication d'une station de base 16 à une autre station de base 17 dont la qualité de réception est meilleure.

Pour pouvoir déterminer la station de base la plus appropriée, le téléphone portable 13 effectue, de manière périodique, des mesures (ou « Network Measurement Results » en langue anglaise) sur au moins un signal prédéfini provenant de chacune des deux stations de base 16, 17, tel que défini dans les spécifications GSM TS05.08 pour le réseau GSM 15 ou GERAN (pour « GSM EDGE Radio Access Network » en langue anglaise) ou 3GPP TS 25.331 pour un réseau UMTS.

Différentes mesures sont utilisées, certaines sont réalisées hors communication, lorsque le téléphone est en mode de veille, et d'autres sont réalisées pendant une communication, pour optimiser la qualité de transmission. Les paramètres mesurés hors communication sont, par exemple, la puissance du signal reçu largement connu sous le nom de Rxlev ou Rx level sur le canal de signalisation diffusé BCCH (pour « Broadcast Control CHannel ») en GSM. Un paramètre équivalent RSSI (pour « Received Signal Strength Indicator ») existe en UMTS, et il est mesuré sur un canal commun appelé CPICH (pour « Common Pllot CHannel »). En outre, les réseaux UMTS prévoient, également, une mesure du rapport signal sur bruit Ec/N0 sur le canal CPICH, pour évaluer la qualité de réception. En communication, des mesures de qualité de transmission peuvent être réalisées sur des échanges de données entre le téléphone 13 et la station de base 16 avec laquelle le téléphone communique. Ces paramètres sont, par exemple, le taux d'erreur binaire BER (pour « Bit Error Rate ») ou le taux d'erreur par bloc BLER (pour « BLoc Error Rate »)

Le téléphone portable 13 peut avoir accès au réseau Internet 19 par l'intermédiaire du réseau de communication 15 via la passerelle 18. Egalement, la carte à puce 10 peut avoir accès à un serveur 115 d'Internet par l'intermédiaire du téléphone 13. La passerelle 18 effectue la traduction des paquets de données entre le protocole GPRS du réseau de radio communication 15 et le protocole TCP/IP d'Internet 19.

Le serveur 115 peut être un serveur d'administration de cartes à puce constituant une plateforme OTA (pour « Over The Air »). Un tel serveur 115 est, par exemple, géré par l'opérateur du réseau de radiocommunication 15. Ainsi, l'opérateur peut intervenir pour modifier le contenu d'une carte à puce qu'il gère et contrôle. La carte à puce 10 peut être amenée à se connecter, de manière automatique et transparente, auprès du serveur 115, pour vérifier si une mise à jour logicielle est à télécharger, par exemple une fois par semaine et de préférence lorsque la bande passante n'est pas surchargée.

Selon l'invention, pour ouvrir une connexion TCP/IP vers le réseau Internet, la carte à puce 10 surveille la valeur d'au moins un paramètre représentatif de la qualité de transmission. Une telle surveillance se fait à l'aide d'un ou plusieurs des paramètres mesurés par le téléphone pour gérer la communication avec les différentes stations de bases 16 et 17.

La figure 2 montre, de manière plus détaillée, la relation entre le téléphone portable 13 coopérant avec la carte à puce 10. Le téléphone portable 13, en tant que dispositif hôte, comporte un lecteur de carte à puce destiné à accueillir la carte à puce 10, en tant que dispositif électronique portable. Le lecteur de carte à puce comporte principalement des moyens mécaniques (non représentés), pour maintenir la carte 10 dans le téléphone et maintenir un connecteur de la carte 10 en contact électrique avec un connecteur correspondant du téléphone 13, afin de réaliser une connexion électrique matérialisée par un lien à contact 12.

Le téléphone 13 comporte, par exemple, un bus bi-directionnel 220 relié à un microprocesseur 218 gérant et contrôlant l'ensemble des moyens du téléphone portable 13. Le microprocesseur 218 pilote notamment les échanges de données avec l'extérieur, au travers d'une interface radio 212 pour les échanges avec le réseau de radiocommunications 15, une interface homme-machine 214, constitué d'un clavier, d'un écran, d'un microphone et d'un haut-parleur, et d'une interface de carte 210 conforme au protocole ISO 7816 reliée au lien à contact 12. Le téléphone 13 portable inclut des mémoires volatiles et non volatiles 216 stockant des données temporaires, des données figées, des programmes et applications nécessaires pour son fonctionnement interne. Les mémoires 216 sauvegardent, entre autres, des données propres aux mesures effectuées sur des signaux provenant du réseau radio 15 qui constituent un ou des paramètres représentatifs de la qualité de transmission sur l'interface air avec le réseau radio.

La carte à puce 10 est dotée d'un microprocesseur 28 gérant et contrôlant l'ensemble des moyens de la carte à puce 10 échangeant des données entre eux au travers d'un bus bi-directionnel 25. La carte à puce 10 est munie d'une interface 22 ISO 7816 pour échanger des données sur le lien bi-directionnel 12 avec le téléphone portable 13. La carte à puce 10 comporte des mémoires volatiles et non volatiles 26 stockant des données temporaires ou permanentes, des programmes et applications nécessaires notamment pour son fonctionnement interne et des échanges de données avec son hôte.

Comme applications, entre autres, la carte à puce 10 dispose d'une application connue « SIM Toolkit » qui permet à la carte de récupérer des données provenant de l'hôte, et qui permet à la carte 10 d'initier certaines opérations. A l'aide de SIM Toolkit, la carte peut demander et récupérer le ou les paramètres relatifs à la qualité de transmission déterminés par le téléphone portable 13. Egalement, grâce à SIM Toolkit, la carte 10 peut établir une communication indépendamment de l'utilisateur du téléphone, c'est-à-dire sans nécessiter son intervention.

Parmi ses programmes, la carte à puce 10 comporte un programme de mise à jour de logiciel qui lui demande de se connecter à un serveur pour vérifier si une mise à jour est disponible et pour télécharger la mise à jour si celle-ci est requise.

Selon l'invention, le microprocesseur 28 récupère la valeur d'au moins un paramètre représentatif d'une qualité de transmission de données avec le réseau radio et mesuré par le téléphone portable 13 qu'il compare avec une valeur seuil correspondante, permettant d'estimer si les conditions de transmission sont suffisamment bonnes ou non, et décide de transmettre ou de ne pas transmettre des données établissant une session automatique avec un serveur distant accessible au travers du réseau Internet.

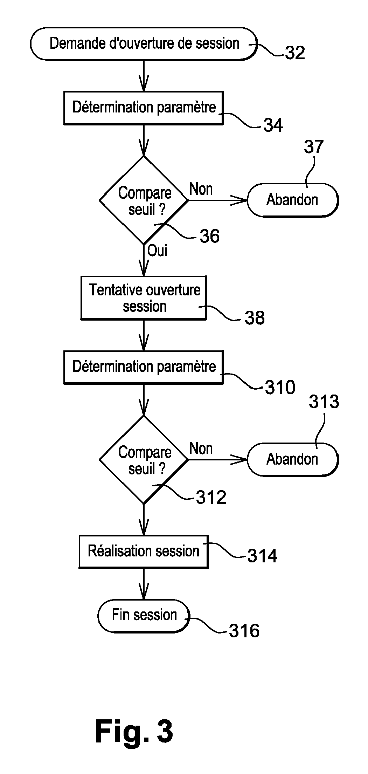

La figure 3 montre, sous forme d'organigramme, un exemple de procédé pour établir ou non une session automatique depuis la carte à puce 10 sur le réseau Internet 19 au travers du réseau de radiocommunication 15.

L'organigramme commence par une demande d'ouverture d'une session 32 avec un serveur distant du réseau Internet 19. Une telle demande d'ouverture 32 vient, par exemple, d'un programme de vérification de mise à jour de la carte qui décide à une date et/ou une heure prédéterminées de se connecter pour rentrer en communication avec un serveur de mise à jour. Une telle demande d'ouverture se produit, de manière transparente vis-à-vis de l'utilisateur de la carte à puce 10, c'est-à-dire à son insu, et alors que le téléphone portable est en mode de veille.

Lors d'une étape 34, la carte à puce 10 requiert, auprès du téléphone 13, un ou plusieurs paramètres représentatifs de la qualité de transmission. Dans le cas où le téléphone portable 13 est en mode veille, c'est-à-dire non connecté au réseau radio, les paramètres que peut envoyer le téléphone sont la puissance d'un signal reçu ou le rapport signal sur bruit Ec/N0. Les paramètres transmis dépendent, bien entendu, du standard à respecter par le réseau de radiocommunication 15.

Un test de comparaison 36 est ensuite réalisé. La carte à puce compare la ou les valeurs du paramètre représentatif de la qualité de transmission à une ou plusieurs valeurs seuil qui correspondent par exemple à un niveau minimum acceptable.

Si, suite à la comparaison 36, la ou les valeurs du paramètre représentatif de la qualité de transmission correspondent à des conditions de transmission radio insuffisamment bonnes, alors on abandonne 37 l'ouverture de session. L'abandon 37 a pour effet d'envoyer, au programme ou à l'application requérant la connexion au serveur, une impossibilité de se connecter. Le programme requérant la connexion peut alors déterminer une nouvelle date pour requérir, à nouveau, une connexion. En variante, il est possible de mettre en oeuvre une temporisation, par exemple de 15 mn, pour reboucler sur l'étape 34 avant un abandon de connexion.

Si, suite à la comparaison 36, la ou les valeurs du paramètre représentatif de la qualité de transmission correspondent à des conditions de transmission radio suffisamment bonnes, alors la carte à puce décide 38 de déclencher une tentative d'ouverture de session 38. Le téléphone portable 13 passe de l'état de veille à un état connecté au réseau radio 15. Les paramètres de qualité de transmission disponibles étant alors plus précis, on effectue, à nouveau, une détermination de la qualité de transmission avant de poursuivre plus avant la session engagée avec Internet 19.

La connexion du téléphone 13 avec le réseau étant établie, l'étape de détermination d'un deuxième paramètre 310 permet à la carte à puce 10 de récupérer des paramètres plus précis tel que le BER et/ou le BLER, suivant le standard satisfait par le réseau 15.

Un test de comparaison 312 est ensuite effectué. La carte à puce compare alors le BER et/ou le BLER à un seuil prédéterminé qui correspond à un niveau d'erreur maximum acceptable.

Si, suite à la comparaison 312, la valeur du BER et/ou du BLER correspond à des conditions de transmission radio insuffisamment bonnes, alors on abandonne 313 l'ouverture de session. L'abandon 313 se produit de la même manière et a les mêmes effets que ceux décrits en relation avec l'étape d'abandon 37 précédente.

Si, suite à la comparaison 312, la valeur du BER et/ou du BLER correspond à des conditions de transmission radio suffisamment bonnes, alors la carte à puce 10 poursuit la réalisation 314 de la session avec le réseau Internet 19.

Puis, une fois la session réalisée, lors d'une étape finale 316, la carte à puce ou le serveur distant du réseau Internet clôt la session ouverte en transmettant un message approprié au serveur distant ou à la carte à puce respectivement.

Selon une variante, la valeur seuil utilisée pour la comparaison 36 est déterminée pour correspondre à une forte puissance de signal reçu Rxlev et/ou un fort rapport du signal sur bruit Ec/N0. Selon une telle variante, on considère qu'une unique comparaison permet de considérer que les conditions de transmission radio sont suffisamment bonnes pour passer de l'étape de tentative d'ouverture de session 38 directement à l'étape de réalisation de la session 314.

Selon une autre variante, la comparaison 36 s'effectue, de manière double, vis-à-vis d'une valeur seuil élevée et d'une valeur seuil basse. Ainsi, si la puissance du signal reçu Rxlev et/ou le rapport signal sur bruit Ec/N0 est/sont très élevés, i.e. supérieurs aux valeurs seuil élevées, alors on effectue successivement les étapes d'ouverture 38 et de réalisation de session 314 sans réaliser les étapes de détermination 310 et de comparaison 312. Si la puissance du signal reçu Rxlev et/ou le rapport du signal sur bruit Ec/N0 est/sont comprises entre les valeurs seuil élevée et basse, alors on réalise les étapes de détermination 310 et de comparaison 312 à la suite de l'étape d'ouverture de session 38 et avant l'étape de réalisation de session 314 sans réaliser les étapes de détermination 310 et de comparaison 312. Si la puissance du signal reçu Rxlev et/ou le rapport signal sur bruit Ec/N0 est/sont trop faibles, i.e. inférieurs aux valeurs seuil basses, alors on réalise l'étape d'abandon 37.

Un unique paramètre est également considéré, dans le cas où le téléphone portable 13 est déjà connecté au réseau 15, c'est-à-dire en cours de communication, lors de la demande d'ouverture de session 32, l'organigramme explicité peut être modifié. La carte à puce 10 dispose à la demande d'ouverture de session du seul paramètre BER et/ou du BLER. Les étapes de détermination 34, de comparaison 36 et d'abandon 37 peuvent être alors respectivement remplacées par les étapes de détermination 310, de comparaison 312 et d'abandon 313 et l'étape de tentative 38 se produit immédiatement avant l'étape de réalisation de la session 314.

## Revendications

1. Procédé (30) pour établir une session automatique à partir d'un dispositif (10) électronique portable sur un premier réseau (114) à partir d'un deuxième réseau (15),
**caractérisé en ce que** le procédé comporte les étapes de :
- détermination (34) d'au moins un premier paramètre représentatif d'une qualité de transmission du deuxième réseau (15),
- comparaison (36) de la valeur dudit premier paramètre à un premier seuil,
- abandon (37) ou tentative (38) d'ouverture de session sur le premier réseau par le dispositif électronique portable à partir du deuxième réseau, en fonction du résultat de la comparaison.

2. Procédé selon la revendication 1, dans lequel le procédé comprend, en outre, les étapes de :
- détermination (310) d'au moins un deuxième paramètre représentatif d'une qualité de transmission du deuxième réseau (15),
- comparaison (312) de la valeur dudit deuxième paramètre à un deuxième seuil,
- abandon (313) ou poursuite (314) de session sur le premier réseau par le dispositif électronique portable à partir du deuxième réseau, en fonction du résultat de la comparaison.

3. Procédé selon la revendication 2, dans lequel le deuxième paramètre est choisi parmi l'un des paramètres suivants :
- un taux d'erreur par bit transmis sur le deuxième réseau,
- un taux d'erreur par bloc de données transmis sur le deuxième réseau.

4. Procédé selon l'une des revendications 1 à 3, dans lequel le deuxième réseau est un réseau sans fil et dans lequel le premier paramètre est choisi parmi l'un des paramètres suivants :
- une puissance d'un signal reçu,
- un rapport d'un signal à bruit du signal reçu.

5. Procédé selon l'une des revendications 1 à 4, dans lequel le dispositif (10) électronique portable communique avec le deuxième réseau par l'intermédiaire d'un dispositif (13) hôte et dans lequel le dispositif hôte élabore le premier et/ou le deuxième paramètre qu'il fournit, sur requête, au dispositif électronique portable.

6. Procédé selon l'une des revendications 1 à 5, dans lequel le deuxième réseau est un réseau de radiotéléphonie de type GPRS, UMTS, GSM, et/ou EDGE.

7. Procédé selon l'une des revendications 1 à 6, dans lequel le premier réseau est un réseau filaire de type Internet.

8. Dispositif (10) électronique portable apte à établir une session automatique sur un premier réseau (114) à partir d'un deuxième réseau (15), le dispositif comportant des moyens (28) de communication et de traitement d'information,
**caractérisé en ce que** les moyens (28) de traitement et de communication sont configurés pour réaliser :
- un moyen de détermination d'au moins un premier paramètre représentatif d'une qualité de transmission du deuxième réseau (15),
- un moyen de comparaison de la valeur dudit premier paramètre à un premier seuil,
- un moyen de décision pour abandonner ou faire une tentative d'ouverture de session sur le premier réseau à partir du deuxième réseau, en fonction du résultat de la comparaison.

9. Dispositif selon la revendication 8, dans lequel les moyens (28) de traitement et de communication sont configurés pour réaliser en outre :
- un moyen de détermination d'au moins un deuxième paramètre représentatif d'une qualité de transmission du deuxième réseau (15),
- un moyen de comparaison de la valeur dudit premier paramètre à un premier seuil,
- un moyen de décision pour abandonner ou poursuivre la session sur le premier réseau par le dispositif électronique portable à partir du deuxième réseau, en fonction du résultat de la comparaison.

10. Dispositif selon la revendication 9, dans lequel le deuxième paramètre est choisi parmi l'un des paramètres suivants :
- un taux d'erreur par bit transmis sur le deuxième réseau,
- un taux d'erreur par bloc de données transmis sur le deuxième réseau.

11. Dispositif selon l'une des revendications 8 à 10, dans lequel le deuxième réseau est un réseau sans fil et dans lequel le premier paramètre est choisi parmi l'un des paramètres suivants :
- une puissance d'un signal reçu,
- un rapport du signal à bruit d'un signal reçu.

12. Dispositif selon l'une des revendications 8 à 11, dans lequel le dispositif (10) électronique portable communique avec le deuxième réseau par l'intermédiaire d'un dispositif (13) hôte et dans lequel les moyens de communication réalisent les moyens de détermination par l'envoi d'une requête au dispositif hôte, le dispositif hôte élaborant le premier et/ou le deuxième paramètre qu'il fournit, en retour, au dispositif électronique portable.

13. Système comprenant un dispositif hôte coopérant avec au moins un dispositif électronique portable pour établir une session automatique sur un premier réseau (114) à partir d'un deuxième réseau (15), le dispositif électronique portable comportant des moyens de communication et de traitement d'information, et le dispositif hôte comportant une interface de communication avec le deuxième réseau,
**caractérisé en ce que** les moyens de traitement et de communication sont configurés pour réaliser :
- un moyen de détermination d'au moins un premier paramètre représentatif d'une qualité de transmission du deuxième réseau (15),
- un moyen de comparaison de la valeur dudit premier paramètre à un premier seuil,
- un moyen de décision pour abandonner ou poursuivre la session sur le premier réseau par le dispositif électronique portable à partir du deuxième réseau, en fonction du résultat de la comparaison.

14. Système selon la revendication 13, dans lequel les moyens (28) de traitement et de communication sont configurés pour réaliser en outre :
- un moyen de détermination d'au moins un deuxième paramètre représentatif d'une qualité de transmission du deuxième réseau (15),
- un moyen de comparaison de la valeur dudit deuxième paramètre à un deuxième seuil,
- un moyen de décision pour abandonner ou poursuivre la session sur le premier réseau par le dispositif électronique portable à partir du deuxième réseau, en fonction du résultat de la comparaison.

15. Système selon la revendication 14, dans lequel le deuxième paramètre est choisi parmi l'un des paramètres suivants :
- un taux d'erreur par bit transmis sur le deuxième réseau,
- un taux d'erreur par bloc de données transmis sur le deuxième réseau.

16. Système selon l'une des revendications 13 à 15, dans lequel le deuxième réseau est un réseau sans fil et dans lequel le premier paramètre est choisi parmi l'un des paramètres suivants :
- une puissance d'un signal reçu,
- un rapport du signal à bruit d'un signal reçu.

17. Système selon l'une des revendications 13 à 15, dans lequel ledit dispositif (10) électronique portable communique avec le dispositif (13) hôte et dans lequel les moyens (28) de communication réalisent les moyens de détermination par l'envoi d'une requête au dispositif hôte, le dispositif hôte élaborant le premier et/ou le deuxième paramètre qu'il fournit, en retour, au dispositif électronique portable.

18. Système selon l'une des revendications 13 à 17, dans lequel le deuxième réseau est un réseau de radiotéléphonie de type GPRS, UMTS, GSM, et/ou EDGE.

19. Système selon l'une des revendications 13 à 18, dans lequel le premier réseau est un réseau filaire de type Internet.

20. Système selon l'une des revendications 13 à 19, dans lequel le dispositif hôte est un téléphone portable et le dispositif électronique portable est une carte à puce.
